# EUROPÄISCHE PATENTSCHRIFT

(11) **EP 2 808 187 B1**
(45) Veröffentlichungstag und Bekanntmachung des Hinweises auf die Patenterteilung: **11.07.2018**
(21) Anmeldenummer: 14001393.9
(22) Anmeldetag: 16.04.2014
(51) Int. Cl.: B60G 7/00, B60G 9/00, B60G 11/46, B60G 11/28, B60G 11/113

(54) **Parabellenker**
Parabolic link
Lien parabolique

(30) Priorität: 27.05.2013 DE 102013008877
(43) Veröffentlichungstag der Anmeldung: 03.12.2014
(73) Patentinhaber: Schomäcker Federnwerk GmbH, 49324 Melle (DE)
(72) Erfinder: Hubert Temmen, 49716 Meppen (DE); Dr.-Ing. Torsten Bispink, 49086 Osnabrück (DE)
(74) Vertreter: Pott, Ulrich

(56) Entgegenhaltungen:
- EP-A1- 1 439 081
- EP-A1- 1 632 370
- EP-A2- 1 138 432
- WO-A1-2011/059312
- DE-U1- 29 616 351
- DE-U1- 29 713 996
- GB-A- 2 125 514
- US-A- 3 841 655
- US-A1- 2011 227 308

## Beschreibung

Die Erfindung bezieht sich auf einen Parabellenker mit einem an einem Parabellenkerende vorgesehenen gerollten Auge und mit einem dem Auge gegenüberliegenden Parabellenkerendbereich.

Parabellenker sind wichtige Bauteile für insbesondere Nutzfahrzeugauflieger und anhänger, bei denen sich Luftfederungssysteme mit Parabellenkern weitestgehend durchgesetzt haben. Parabellenker sind jedoch schwergewichtige Bauteile, wobei in den letzten Jahren starke Bemühungen zu beobachten waren, die für die Produktion solcher Parabellenker erforderlichen Energieaufwendungen zu verringern und auch das Gewicht zu reduzieren.

Aus der EP 1 138 432 A2 ist ein Parabellenker bekannt mit einem zwischen dem Parabellenkerauge und dem gegenüberliegenden Parabellenkerendbereich gegensinnig abgekröpften Zwischenbereich, wobei der dem Parabellenkerauge gegenüberliegende Parabellenkerendbereich sich bis zu seinem Ende hin verjüngt mit einer abgerundeten Spitze. Der abgekröpfte Zwischenbereich ist geplättet ausgebildet, so dass er sich ausgehend von dem gerollten Auge verbreitert. Dies dient dazu, insbesondere Auflageflächen zu verbreitern, an denen ein Achskörper über U-förmige Zuganker mit Endgewinden und daran zu befestigenden Befestigungsstegen und - muttern zu verspannen. Dieser Lenker ist damit ein relativ schwergewichtiges Bauteil.

Aus der US 2011/0227308 A1, die den Oberbegriff des Anspruchs 1 offenbart, ist ein Parabellenker mit einem an einem Parabellenkerende vorgesehenen gerollten Auge und mit einem dem gerollten Auge gegenüberliegenden Parabellenkerendbereich bekannt, wobei zwischen dem Auge und dem gegenüberliegenden Parabellenkerendbereich ein gerundeter Achsaufnahmebereich vorgesehen ist zur Anordnung eines Achskörpers. In einer Ausgestaltung dieses Parabellenkers dieser Druckschrift ist vorgesehen, dass quer zur Längsrichtung des Parabellenkers eine sickenförmige Aufnahme in dem gerundeten Achsaufnahmebereich vorgesehen ist, in die eine nutenförmige Anformung des Achskörpers als Verdrehsicherung anzuordnen ist. Damit ist jedoch kein Parabellenker geschaffen, der in leichterer Bauweise größeren Beanspruchungen gerecht werden kann. Aus der DE 10 2009 049 400 A1 ist eine Verbindungsstange für eine Drehmomentenstütze bekannt, die aus wenigstens zwei Halbschalen besteht, die an ihren Enden jeweils eine Ausbuchtung in Gestalt von Aufnahmeaugen aufweist. Eine derartige Verbindungsstange ist jedoch nicht geeignet, als Parabellenker für Achskörper eingesetzt zu werden.

Es ist Aufgabe der vorliegenden Erfindung, einen Parabellenker derart weiterzubilden, dass er in leichterer Bauweise großen Beanspruchungen gerecht werden kann. Zur Lösung dieser Aufgabe ist ein Parabellenker der im Anspruch 1 genannten Art vorgesehen.

Damit hat der Parabellenker einen Achsaufnahmebereich, der gerundet ausgebildet ist und mithin gerundete Achskörper aufnehmen kann. Dieser Achsaufnahmebereich ist mit zumindest zwei mit Abstand in Längsrichtung des Parabellenkers vorzusehenden Befestigungsaufnahmen versehen, an denen ein z.B. U-förmiges Zugankerteil mit Endgewinden und Befestigungsmuttern vorgesehen werden kann. Zwischen diesen Befestigungsaufnahmen ist zumindest eine Sicke gelegen, mit der die neben der Sicke vorzusehenden Kontaktflächen dieses Achsaufnahmebereiches bei gleichem Materialeinsatz zu verbreitern sind. Damit ist auch das Auge insgesamt verbreitert. Diese Sicke ist zentral mittig vorgesehen und von der Außenfläche des Parabellenkers einwärts in Richtung auf den Achskörper hin ausgerichtet. Zusätzlich kann eine Sicke angeordnet werden, die von der Innenfläche, also der Fläche des Achsaufnahmebereiches, die zu dem zu befestigenden Achskörper gewandt ist, weg weisend hin zur Außenfläche des Parabellenkers gerichtet ist. Es kann auch eine einwärts, aber auch eine auswärts gerichtete Sicke vorgesehen sein. Durch die Sicke ist jedoch nicht nur der Parabellenker zu verbreitern. Vielmehr ist durch die Sicke auch die Festigkeit des Parabellenkers und damit die Fähigkeit, große Kräfte aufzunehmen, wesentlich erhöht. Insgesamt kann die Verbindung zwischen Achskörper und Parabellenlenker leichter ausgeführt werden, da wenige Verbindungselemente benötigt werden, was zu Kostenvorteilen führt. Gleichwohl ist ein Parabellenkerbauteil zur Verfügung gestellt, das großen Beanspruchungen gerecht werden kann.

Weitere vorteilhafte Ausgestaltungen ergeben sich aus weiteren Unteransprüchen, der weiteren Beschreibung und der Zeichnung. In der Zeichnung zeigen:
- Fig. 1: in einer perspektivischen Darstellung ein erstes Ausführungsbeispiel des Parabellenkers nach der Erfindung mit einer oberen einwärts ausgerichteten Sicke im Achsaufnahmebereich;
- Fig. 2: eine zu Fig. 1 analoge Darstellung in perspektivischer Ansicht in einer Ansicht von oben auf den unteren Bereich des Parabellenkers mit einer Sicke, die von der unteren Fläche des Parabellenkers wegweisend ausgerichtet ist im Achsaufnahmebereich;
- Fig. 3: in einer perspektivischen Ansicht das Ausführungsbeispiel nach Fig. 1 mit montiertem Achskörper;
- Fig. 4: eine Querschnittsdarstellung des Ausführungsbeispiels nach Fig. 3;

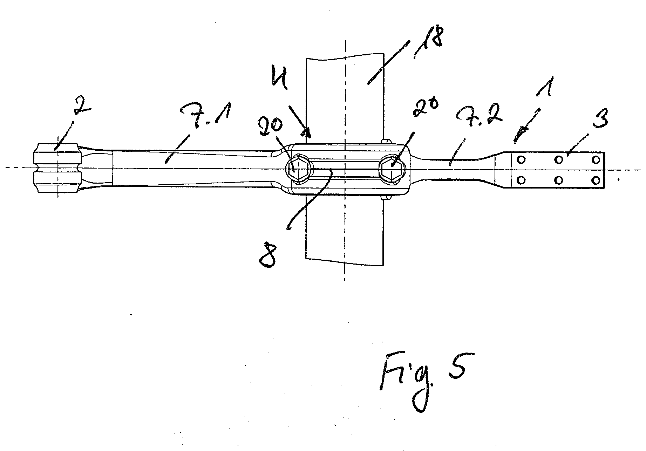

- Fig. 5: eine Ansicht von oben auf das Ausführungsbeispiel nach Fig. 3;

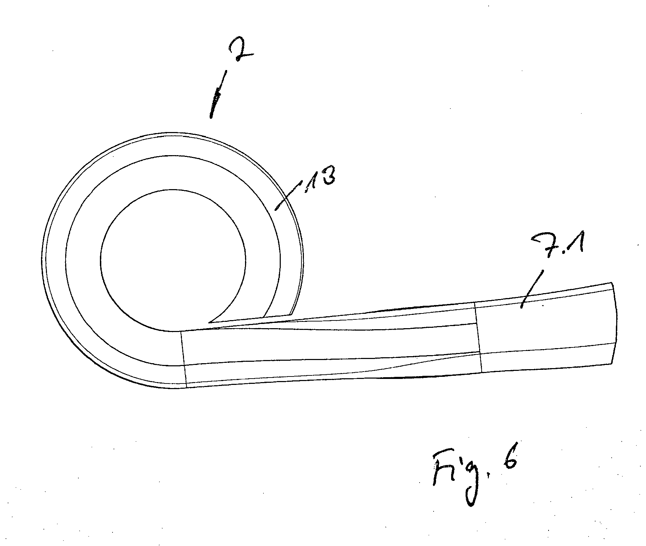

- Fig. 6: ausschnittsweise eine Seitenansicht auf das gerollte Auge des Ausführungsbeispiels nach Fig. 1, und

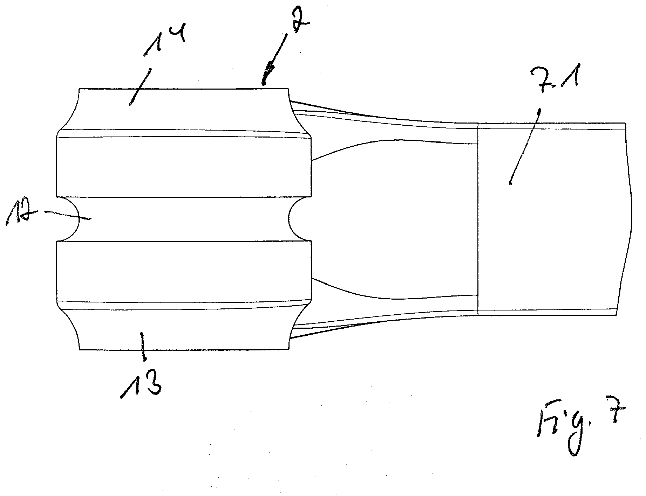

- Fig. 7: ausschnittsweise in einer Ansicht von oben das gerollte Auge gemäß dem Ausführungsbeispiel nach Fig. 1.

In dem Ausführungsbeispiel sind grundsätzlich übereinstimmende Teile mit übereinstimmenden Bezugsziffern versehen.

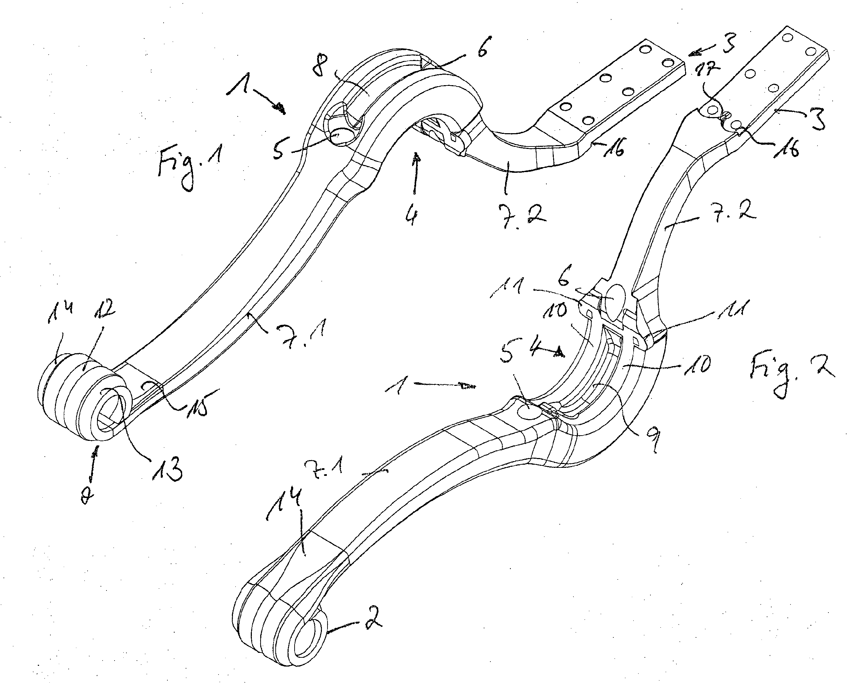

In der Zeichnung ist allgemein mit 1 ein Parabellenker beziffert, der an seinem einen Parabellenkerende ein gerolltes Auge 2 und an dem gerollten Ende 2 gegenüberliegenden Ende einen abgeflachten Parabellenkerendbereich 3 aufweist. Zur Aufnahme des Achskörpers 18 hat er einen Achsaufnahmebereich 4, der gerundet ausgebildet ist mit zwei Befestigungsaufnahmen 5 und 6, wobei sich an den gerundeten Achaufnahmebereich 6 jeweils zwei gegensinnig gerundete Bereiche 7.1 und 7.2 anschließen, wobei der Bereich 7.1 das gerollte Auge 2 und der Bereich 7.2 den abgeflachten, im Wesentlichen rechteckförmigen Parabellenkerendbereich 3 aufweist. Zwischen den Befestigungsaufnahmen 5 und 6 ist in dem Ausführungsbeispiel nach Fig. 1 eine einwärts zu dem zu befestigenden Achskörper 18 hin ausgerichtete Sicke 8 und in dem Ausführungsbeispiel nach Fig. 2 an der Innenseite des Achsaufnahmebereiches 4 eine von dem zu befestigenden Achskörper 18 hin wegweisende Sicke 9 vorgesehen. Es ist möglich, dass die Sicken 8 und 9 in dem Achsaufnahmebereich 4 gemeinsam vorgesehen sind. Durch die Sicken 8 und 9 sind die Kontaktflächen 10 in dem Achsaufnahme 4 bei gleichem Materialeinsatz verbreitet, um der Querschnittsschwächung durch die Befestigungsaufnahmen 5 und 6 entgegenzuwirken.

Wie aus Fig. 2 ersichtlich, schließen sich an diese Kontaktflächenbereiche 10 jeweils angeformte Lappen 11 seitlich an, durch die die Kontaktflächen an dem zu befestigenden Achskörper 18 zu vergrößern sind. Wie aus den Zeichnungen ersichtlich ist, sind auch an dem gerollten Auge 2 Sicken 12 bzw. 13 und 14 vorgesehen. Die Sicke 12 läuft zentral mittig und geht dann absatzfrei bei 14 bzw. 15 in den Bereich 7.1 über. Weiter ist auch ersichtlich, dass die Materialdicke der Bereiche 7.1 bzw. 7.2 zu dem gerollten Auge 2 bzw. zu dem platten Endbereich 3 hin abnimmt. Dieser Bereich 7.2 geht mit einem Absatz bei 16 und einem Dorn 17 in den plattenförmigen Endbereich 3 über.

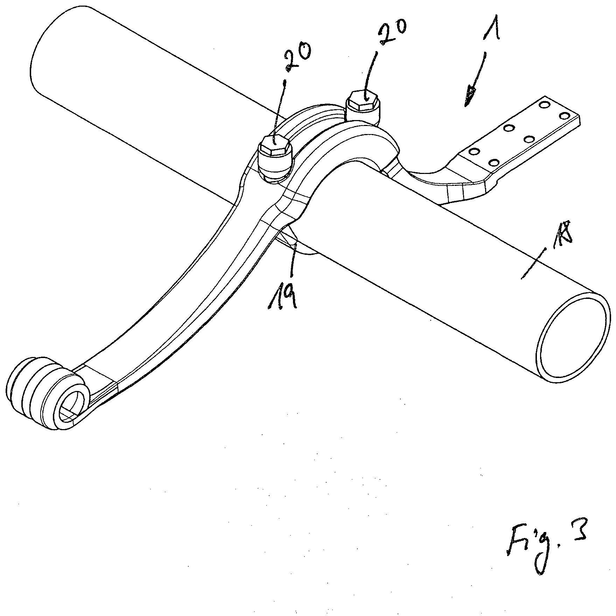

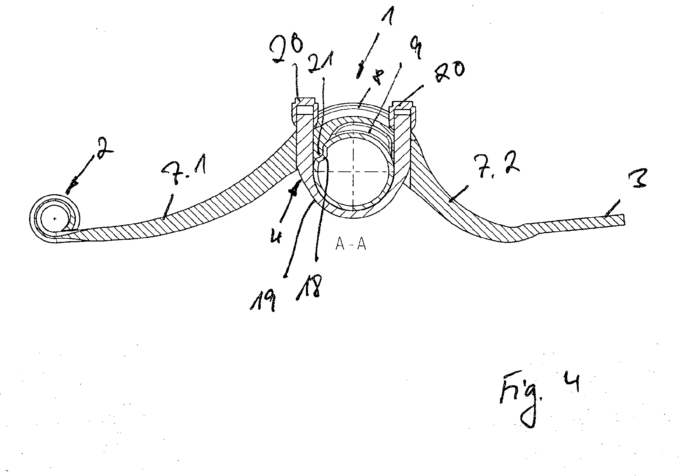

In Fig. 3 ist der montierte Achskörper 18 ersichtlich, der über Zuganker 19 und Muttern 20 mit dem Parabellenker 1 zu verspannen ist. Aus Fig. 4 ist noch ersichtlich, dass der Parabellenker 1 eine Anformung 21 in seinem Achsaufnahmebereich 4 aufweisen kann, der zusammen mit dem Achskörper 18 einen Formschluss erzeugt.

## Patentansprüche

1. Parabellenker (1) mit einem an einem Parabellenkerende vorgesehenen gerollten Auge (2) und mit einem dem gerollten Auge (2) gegenüberliegenden Parabellenkerendbereich (3), wobei zwischen dem Auge (2) und dem gegenüberliegenden Parabellenkerendbereich (3) ein gerundeter Achsaufnahmebereich (4) vorgesehen ist zur Anordnung eines Achskörpers (18) und wobei der Achsaufnahmebereich (4) zumindest eine zwischen zwei Befestigungsaufnahmen (5, 6) zur Befestigung des Achskörpers (18) an dem Parabellenker (1) gelegene Sicke (8) aufweist, **dadurch gekennzeichnet, dass** die zwischen den zumindest zwei mit Abstand in Längsrichtung des Parabellenkers (1) vorzusehenden Befestigungsaufnahmen (5, 6) gelegene zumindest eine Sicke (8) zentral mittig zwischen den beiden Befestigungsaufnahmen (5, 6) gelegen ist, mit der die neben der Sicke (8) vorzusehenden Kontaktflächen (10) des Achsaufnahmebereiches (4) und auch ein Auge (7) bei gleichem Materialeinsatz zu verbreitern sind und dass sich die zentral mittig zwischen den beiden Befestigungsaufnahmen (5, 6) gelegenen Sicke (8) von einer Außenfläche des Achsaufnahmebereiches (4) einwärts nach innen hin auf den zu befestigenden Achskörper (18) erstreckt.

2. Parabellenker (1) nach Anspruch 1, **dadurch gekennzeichnet, dass** eine zwischen den beiden Befestigungsaufnahmen (5, 6) gelegene Sicke (9) sich von einer Innenfläche des Achsaufnahmebereiches (4) ausgehend von dem zu befestigenden Achskörper (18) weg nach außen hin gerichtet erstreckt.

3. Parabellenker (1) nach einem der Ansprüche 1 bis 2, **dadurch gekennzeichnet, dass** an einer inneren Kontaktfläche (16) des Achsaufnahmebereiches (4) ein Vorsprung (21) vorgesehen ist, der bei der Montage des Achskörpers (18) mit dem Parabellenker (1) einen Formschluss erzeugt.

4. Parabellenker nach einem der Ansprüche 1 bis 3, **dadurch gekennzeichnet, dass** der Achsaufnahmebereich (4) in zwei jeweils zwei gegensinnig abgerundete Bereiche (7.1, 7.2) übergeht, wobei der eine mit dem vorgesehenen gerollten Auge (2) und der andere den Parabelfederendbereich (3) aufweist und sich die Materialdicken der beiden Bereiche (7.1, 7.2) zu dem gerollten Auge (2) einerseits und zu dem dem Auge (2) gegenüberliegenden Parabellenkerendbereich (3) verringern.

5. Parabellenker nach einem der Ansprüche 1 bis 4, **dadurch gekennzeichnet, dass** das gerollte Auge (2) zumindest bereichsweise mit einer Sicke (12, 13, 14) ausgebildet ist.

6. Parabellenker nach Anspruch 5, **dadurch gekennzeichnet, dass** die zumindest eine Sicke (12) in dem gerollten Auge zentral mittig vorgesehen ist.

7. Parabellenker nach Anspruch 5 oder 6, **dadurch gekennzeichnet, dass** die zumindest eine Sicke (12) in den Bereich zwischen dem Achsaufnahmebereich (4) und dem gerollten Ende (2) absatzfrei übergeht.

8. Parabellenker nach einem der Ansprüche 1 bis 7, **dadurch gekennzeichnet, dass** in dem gerollten Auge (2) mehr als eine Sicke (12, 13, 14) vorgesehen ist.

9. Parabellenker nach Anspruch 8, **dadurch gekennzeichnet, dass** in dem gerollten Auge zwei oder drei Sicken vorgesehen sind.

10. Parabellenker nach einem der Ansprüche 1 bis 9, **dadurch gekennzeichnet, dass** der dem gerollten Auge (2) gegenüberliegenden Parabellenkerendbereich (3) gegenüber dem Bereich (7.2) zwischen dem Parabellenkerendbereich (3) und dem Achsaufnahmebereich (4) im Wesentlichen rechteckförmig ausgebildet und mit einem Abstandsmaß zu der Unterseite des vorgelagerten Bereichs (7.2) des Parabellenkers (1) vorgesehen ist.

11. Parabellenker nach Anspruch 10, **dadurch gekennzeichnet, dass** der Bereich zwischen dem Achsaufnahmebereich (4) und dem Parabellenkerendbereich (3) mit einem Absatz (16) und mit einer Dornanformung (17) in den Parabellenkerendbereich (3) übergeht.

12. Parabellenker nach einem der Ansprüche 1 bis 11, **dadurch gekennzeichnet, dass** der Achsaufnahmebereich (4) an seiner dem zu befestigenden Achskörper (18) zugewandten Kontaktfläche (10) mit angeformten seitlichen Lappen (11) zur Vergrößerung der Kontaktfläche versehen ist.

## Claims

1. Parabolic link (1) comprising a rolled eye (2) provided on a parabolic link end, and comprising a parabolic link end region (3) opposite the rolled eye (2), a rounded shaft-receiving region (4) being provided, between the eye (2) and the opposing parabolic link end region (3), for arranging a shaft body (18), and the shaft-receiving region (4) comprising at least one bead (8) positioned between two fastening receptacles (5, 6) for fastening the shaft body (18) to the parabolic link (1), **characterised in that the** at least one bead (8) positioned between the at least two fastening receptacles (5, 6), which are spaced apart in the longitudinal direction of the parabolic link (1), is positioned centrally between the two fastening receptacles (5, 6), by means of which bead the contact surfaces (10) of the shaft-receiving region (4) which are to be provided adjacently to the bead (8), as well as an eye (7), are to be widened while using the same amount of material, and **in that** the bead (8) positioned centrally between the two fastening receptacles (5, 6) extends inwards from an outer surface of the shaft-receiving region (4) and towards the shaft body (18) which is to be fastened.

2. Parabolic link (1) according to claim 1, **characterised in that** a bead (9) positioned between the two fastening receptacles (5, 6) extends outwards from an inner surface of the shaft-receiving region (4) and towards the shaft body (18) which is to be fastened.

3. Parabolic link (1) according to either claim 1 or claim 2, **characterised in that** a projection (21) is provided on an inner contact surface (16) of the shaft-receiving region (4), which projection creates a positive engagement with the parabolic link (1) when the shaft body (18) is mounted.

4. Parabolic link according to any of claims 1 to 3, **characterised in that** the shaft-receiving region (4) transitions into two regions (7.1, 7.2), rounded in opposite directions in each case, one region comprising the rolled eye (2) that is provided, and the other region comprising the parabolic spring end region (3), and the material thicknesses of the two regions (7.1, 7.2) decreasing towards the rolled eye (2) and towards the parabolic link end region (3) located opposite the eye (2).

5. Parabolic link according to any of claims 1 to 4, **characterised in that** the rolled eye (2) has a bead (12, 13, 14) at least in regions.

6. Parabolic link according to claim 5, **characterised in that** the at least one bead (12) is provided centrally in the rolled eye.

7. Parabolic link according to either claim 5 or claim 6, **characterised in that** the at least one bead (12) transitions in a stepless manner into the region between the shaft-receiving region (4) and the rolled end (2).

8. Parabolic link according to any of claims 1 to 7, **characterised in that** more than one bead (12, 13, 14) is provided in the rolled eye (2).

9. Parabolic link according to claim 8, **characterised in that** two or three beads are provided in the rolled eye.

10. Parabolic link according to any of claims 1 to 9, **characterised in that** the parabolic link end region (3) opposite the rolled eye (2) is substantially rectangular compared with the region (7.2) between the parabolic link end region (3) and the shaft-receiving region (4), and is spaced from the underside of the upstream region (7.2) of the parabolic link (1).

11. Parabolic link according to claim 10, **characterised in that** the region between the shaft-receiving region (4) and the parabolic link end region (3) transitions into the parabolic link end region (3) via a step (16) and via a thorn-shaped moulding (17).

12. Parabolic link according to any of claims 1 to 11, **characterised in that** the shaft-receiving region (4) is provided, on the contact surface (10) thereof which faces the shaft body (18) to be fastened, with integral lateral tabs (11) for enlarging the contact surface.

## Revendications

1. Bras oscillant parabolique (1) comportant un oeil enroulé (2), prévu à une extrémité du bras oscillant parabolique, et une zone d'extrémité de bras oscillant parabolique (3) opposée à l'oeil enroulé (2), une zone de réception d'axe arrondie (4) étant prévue entre l'oeil (2) et la zone d'extrémité de bras oscillant parabolique opposée (3) pour disposer un corps d'axe (18) et la zone de réception d'axe (4) comportant au moins une moulure (8) placée entre deux logements de fixation (5, 6) destinés à la fixation du corps d'axe (18) au bras oscillant parabolique (1), caractérisé qu'au moins une moulure (8), placée entre les deux logements de fixation (5, 6) à prévoir à une distance dans la direction longitudinale du bras oscillant parabolique (1), est placé au centre entre les deux logements de fixation (5, 6), laquelle moulure permet d'étendre les surfaces de contact (10), à prévoir à côté de la moulure (8), de la zone de réception d'axe (4) et également un oeil (7) en cas d'utilisation de la même matière et en ce que la moulure (8) placée au centre entre les deux logements de fixation (5, 6) s'étend depuis une surface extérieure de la zone de réception d'axe (4) vers l'intérieur en direction du corps d'axe (18) à fixer.

2. Bras oscillant parabolique (1) selon la revendication 1, **caractérisé en ce qu'**une moulure (9), placée entre les deux logements de fixation (5, 6), s'étend depuis une surface intérieure de la zone de réception d'axe (4), à partir du corps d'axe (18) à fixer, vers l'extérieur.

3. Bras oscillant parabolique (1) selon l'une des revendications 1 à 2, **caractérisé en ce qu'**une saillie (21) est prévue au niveau d'une surface de contact intérieure (16) de la zone de réception d'axe (4), laquelle saillie crée une liaison par complémentarité de formes avec le bras oscillant parabolique (1) lors du montage du corps d'axe (18).

4. Bras oscillant parabolique selon l'une des revendications 1 à 3, **caractérisé en ce que** la zone de réception d'axe (4) se transforme en deux zones arrondies (7.1, 7.2) de sens opposés, l'une comportant l'oeil enroulé (2) prévu et l'autre comportant la zone d'extrémité de bras oscillante parabolique (3) et les épaisseurs de matière des deux zones (7.1, 7.2) diminue en direction de l'oeil enroulé (2) d'une part et de la zone d'extrémité de bras oscillant parabolique (3) opposée à l'oeil (2).

5. Bras oscillant parabolique selon l'une des revendications 1 à 4, **caractérisé en ce que** l'oeil enroulé (2) est conçu au moins par endroits avec une moulure (12, 13, 14) .

6. Bras oscillant parabolique selon la revendication 5, **caractérisé en ce que** l'au moins une moulure (12) est prévue au centre dans l'oeil enroulé.

7. Bras oscillant parabolique selon la revendication 5 ou 6, **caractérisé en ce que** l'au moins une moulure (12) se transforme sans épaulement en la zone située entre la zone de réception d'axe (4) et l'extrémité enroulée (2).

8. Bras oscillant parabolique selon l'une des revendications 1 à 7, **caractérisé en ce que** plus d'une moulure (12, 13, 14) est prévue dans l'oeil enroulé (2).

9. Bras oscillant parabolique selon la revendication 8, **caractérisé en ce que** deux ou trois moulures sont prévues dans l'oeil enroulé.

10. Bras oscillant parabolique selon l'une des . revendications 1 à 9, **caractérisé en ce que** la zone d'extrémité de bras oscillant parabolique (3) opposée à l'oeil enroulé (2) par rapport à la zone (7.2) située entre la zone d'extrémité de bras oscillant parabolique (3) et la zone de réception d'axe (4) a sensiblement une forme rectangulaire et est prévue à une distance du côté inférieur de la zone en amont (7.2) du bras oscillant parabolique (1).

11. Bras oscillant parabolique selon la revendication 10, **caractérisé en ce que** la zone située entre la zone de réception d'axe (4) et la zone d'extrémité de bras oscillant parabolique (3) et pourvue d'un épaulement (16) et d'un ergot (17) se transforme en la zone d'extrémité de bras oscillant parabolique (3).

12. Bras oscillant parabolique selon l'une des revendications 1 à 11, **caractérisé en ce que** la zone de réception d'axe (4) est munie, au niveau de sa surface de contact (10) dirigée vers le corps d'axe (18) à fixer, de pattes latérales rapportées (11) destinées à augmenter la surface de contact.
